# EUROPEAN PATENT APPLICATION

(11) **EP 3 753 805 A1**
(43) Date of publication of application: **23.12.2020**
(21) Application number: 19754407.5
(22) Date of filing: 11.01.2019
(51) Int. Cl.: B61L 27/00, B60L 15/40

(54) **OPERATION CURVE PREPARATION DEVICE, OPERATION ASSISTANCE DEVICE, AND OPERATION CONTROL DEVICE**

(30) Priority: 16.02.2018 JP 2018026356
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: NAMEKI, Hideaki, Tokyo 105-0023 (JP); TONOSAKI, Yukinori, Tokyo 105-0023 (JP); KOIZUMI, Yoshihiro, Tokyo 105-0023 (JP); MIYOSHI, Miyako, Kawasaki-shi, Kanagawa 212-0013 (JP); TSUJI, Hiroshi, Kawasaki-shi, Kanagawa 212-0013 (JP); IYAMA, Hitoshi, Kawasaki-shi, Kanagawa 212-0013 (JP); AOKI, Takeshi, Kawasaki-shi, Kanagawa 212-0013 (JP)
(74) Representative: AWA Sweden AB
(86) International application number: PCT/JP2019/000760
(87) International publication number: WO 2019/159578

(57) **Abstract**

[Problem]

To create an operation curve with low energy consumption without the need of information on the passing speed at a station to be skipped, while matching the passing time at the station to be skipped with a target passing time.

[Solution]

An operation curve creation device includes: a section condition setting unit that sets a travelling range of a movable object, the travelling range having a plurality of sections divided at points to be skipped, and sets a target travelling time in each of the sections; a simulation execution unit that executes a travel simulation based on a parameter set for each of the section, and creates an operation curve of the movable object in the travelling range; a travelling time evaluation unit that evaluates whether a travelling time matches the target travelling time in each of the sections in the travel simulation; and a parameter adjustment unit that adjusts the parameter set for each of the sections according to an evaluation result of the travelling time evaluation unit.

## Description

### TECHNICAL FIELD

Embodiments described herein relate generally to operation curve creation devices, operation assistance devices and operation control devices.

### BACKGROUND ART

In a railroad line including a skipped station, which is skipped by a limited express train that is a following train, and at which a local train that is a preceding train waits for the following train to pass through, between a departure station and a destination station, the following limited express train is required not only to arrive at the destination station at a predetermined time, but also to pass through the skipped station at a predetermined time. A technique used in such a situation is known, in which a passing speed and a passing time are set for an intermediate target point in a section, and an operation curve is created so that the sum of an evaluation value relating to the margin in time and an evaluation value relating to the energy consumption is minimum.

In this technique, the passing speed as well as the passing time at the intermediate target point needs to be set. However, sometimes it would be difficult to appropriately set the passing speed. For example, there may be a case where, due to the travelling time allocation to the sections before and after the skipped station, a great difference in travelling speed is caused between the section before the skipped station and the section after the skipped station. In such a case, if the passing speed is inappropriately set, a discrepancy may be caused in a zone around the skipped station, and an inappropriate driving operation may increase energy consumption.

### [Prior Art Document]

### [Patent Document]

Patent Document 1: JP H07-165080 A

### SUMMARY OF THE INVENTION

### Technical Problem to be Solved by the Invention

It is an object of the present invention to provide an operation curve creation device, an operation assistance device, and an operation control device capable of creating an operation curve without the need for information on the passing speed at a station to be skipped. The operation curve presents low consumption energy while matching the passing time at the station to be skipped with a target passing time.

### Solution to Problem

In order to solve the aforementioned problem, an operation curve creation device according to the present invention includes: a section condition setting unit that sets a travelling range of a movable object, the travelling range having a plurality of sections divided at points to be skipped, and sets a target travelling time in each of the sections; a simulation execution unit that executes a travel simulation based on a parameter set for each of the section, and creates an operation curve of the movable object in the travelling range; a travelling time evaluation unit that evaluates whether a travelling time matches the target travelling time in each of the sections in the travel simulation; and a parameter adjustment unit that adjusts the parameter set for each of the sections according to an evaluation result of the travelling time evaluation unit.

### BRIEF DESCRIPTION OF DRAWINGS

FIG. 1 is a block diagram showing a schematic configuration of an operation curve creation device according to a first embodiment.
FIG. 2 is a flowchart of an example of the procedure performed by the operation curve creation device according to the first embodiment.
FIG. 3 is a diagram for explaining the process of step S3 in the flowchart shown in FIG. 2.
FIG. 4 is a diagram for explaining the processes of steps S5 and S6 of the flowchart shown in FIG. 2.
FIG. 5 is a diagram showing an operation curve in which the travelling time matches the target travelling time in each section in the process of step S7 in the flowchart shown in FIG. 2.
FIG. 6 is a diagram for explaining the processes of steps S8 and S9 in the flowchart shown in FIG. 2.
FIG. 7 is a diagram for explaining the processes of steps S10 and S11 in the flowchart shown in FIG. 2.
FIG. 8 is a diagram showing a final operation curve in which the travelling time matches the target travelling time in each section in the process of step S12 in the flowchart shown in FIG. 2.
FIG. 9 is a block diagram showing a schematic configuration of an operation assistance device according to a second embodiment including the operation curve creation device according to the first embodiment.
FIG. 10 is a block diagram showing a schematic configuration of an operation control device according to a third embodiment including the operation curve creation device according to the first embodiment.

### DESCRIPTION OF EMBODIMENTS

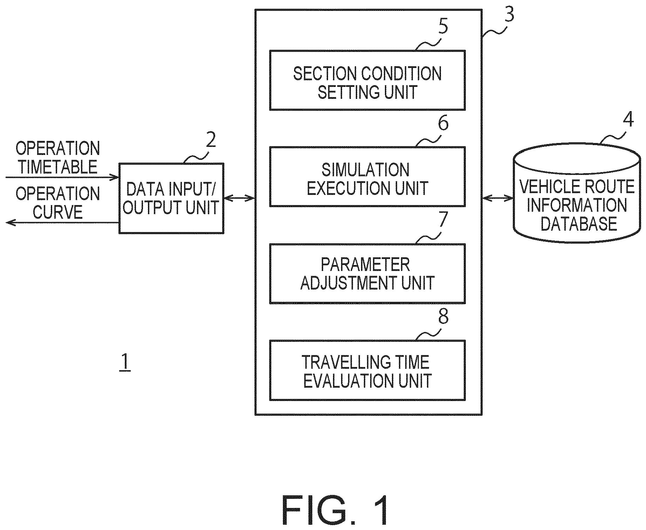

FIG. 1 is a block diagram showing a schematic configuration of an operation curve creation device 1 according to a first embodiment. The operation curve creation device 1 shown in FIG. 1 creates a train operation curve with respect to a travelling range including a plurality of sections divided by skipped stations. The operation curve creation device 1 according to this embodiment may be used for creating an operation curve for a movable object other than a train. In the following descriptions, an example of train operation curve creation will be described.

The operation curve creation device 1 includes a data input/output unit 2, a calculation unit 3, and a vehicle route information database 4. The calculation unit 3 includes a section condition setting unit 5, a simulation execution unit 6, a parameter adjustment unit 7, and a travelling time evaluation unit 8. The function of the operation curve creation device 1 shown in FIG. 1 may be realized by a commonly-used personal computer (PC), for example.

The data input/output unit 2 receives, as an input, operation timetable information or the like and outputs an operation curve that is finally selected by the travelling time evaluation unit 8, which will be described later. The data input/output unit 2 includes, for example, a user interface, and enables the user to easily input information required by the operation curve creation device 1 and to easily obtain information on the operation curve created by the operation curve creation device 1. The data input/output unit 2 may connect to a network that is not shown to input/output necessary information through the network.

The vehicle route information database 4 records train performance information such as the powering characteristics and the braking characteristics, and route information such as the station locations, the speed limit, the slopes, and the curves. The vehicle route information database 4 may also record operation timetable information. The information stored in the vehicle route information database 4 is suitably updated in accordance with changes in situation.

The section condition setting unit 5 sets the travelling range of the train, and the target travelling time in each of a plurality of sections divided by the skipped stations. Specifically, the section condition setting unit 5 sets the travelling range of the train including the location of the starting station, the locations of the skipped stations, and the location of the destination station based on the operation timetable information inputted at the data input/output unit 2, and calculates the target travelling time in each of the sections divided by the skipped stations based on the departure time, the passing times, and the arrival time. The operation timetable information may be obtained from the vehicle route information database 4. The user may directly input the target travelling time in each section using the data input/output unit 2.

The simulation execution unit 6 performs a travel simulation based on the train performance and route information recorded in the vehicle route information database 4, the travelling range of the train set by the section condition setting unit 5, and parameters set for each of the sections by a parameter adjustment unit 7, which will be described later, and creates an operation curve of the train in the travelling range. The simulation execution unit 6 performs a first travel simulation and a second travel simulation. In the first travel simulation, the hypothetical maximum speed is adjusted in each section and an operation curve is created in which the travelling time matches the target travelling time in each section on the travelling condition that no coasting is performed. In the second travel simulation, an increase in speed is added to the hypothetical maximum speed in each section, which is adjusted in the first travel simulation, the coasting condition in each section is adjusted, and an operation curve is created so that the travelling time matches the target travelling time in each section.

The parameter adjustment unit 7 adjusts parameters that the simulation execution unit 6 uses when performing the travel simulation. In the first travel simulation, the hypothetical maximum speed in each section is adjusted as a parameter. In the second travel simulation, the coasting condition for each section is adjusted as a parameter. For example, if the travelling time in the travel simulation is shorter than the target travelling time in each section, the hypothetical maximum speed is decreased in each section in the first travel simulation, and the coasting in each section is increased in the second travel simulation. On the other hand, if the travelling time in the travel simulation is longer than the target travelling time in each section, the hypothetical maximum speed is increased in each section in the first travel simulation, and the coasting in each section is decreased in the second travel simulation. The increase and the decrease in coasting are adjusted using such a parameter as the amount of decrease in speed caused by the coasting or the coasting starting point.

The travelling time evaluation unit 8 evaluates whether the travelling time in each section in the travel simulation performed by the simulation execution unit 6 matches the target travelling time in the corresponding section. The evaluation is performed on both the first travel simulation and the second travel simulation. When the travelling time matches the target travelling time in all sections in the second travel simulation, the travelling time evaluation unit 8 selects the operation curve at that time as a final operation curve, and transmits the final operation curve to the data input/output unit 2. The travelling time and the target travelling time are regarded as being matched if the difference between the travelling time and the target travelling time is within an allowable range. In the example of this embodiment, the range from -5 seconds to +0 seconds relative to the target travelling time is the allowable range.

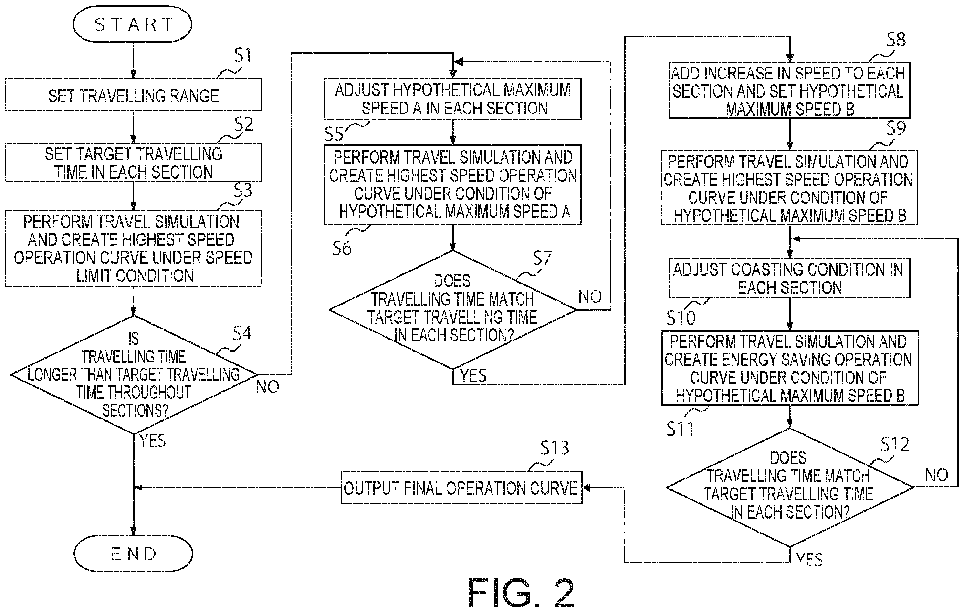

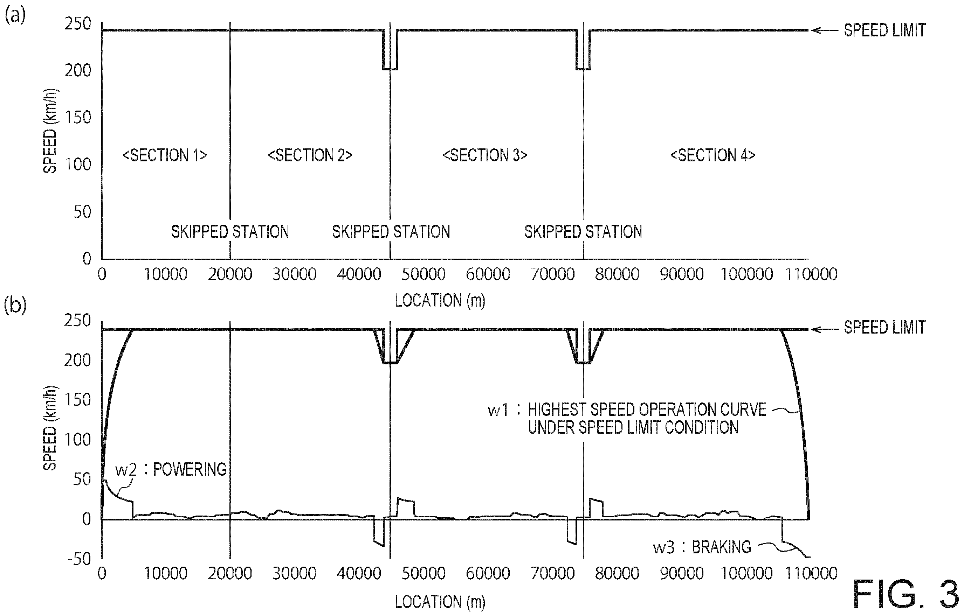

FIG. 2 is a flowchart of an example of the procedure performed by the operation curve creation device 1 shown in FIG. 1. FIGs. 3 to 8 are diagrams for explaining the process of each step shown in FIG. 2, and show operation curves etc. sequentially created in the procedure of creating the final operation curve. In each of FIGs. 3 to 8, the horizontal axis indicates the travelling position (m) of the train, and the vertical axis indicates the speed (km/h) of the train. Each step shown in FIG. 2 will be described below with reference to FIGs. 3 to 8.

The section condition setting unit 5 sets the travelling range between the departure station and the destination station of the train (step S1). The travelling range is from the location of the departure station to the location of the destination station, including the skipped stations located between the departure station and the destination station. The travelling range is set based on the operation timetable information inputted to the data input/output unit 2, for example.

The section condition setting unit 5 sets the target travelling time in each of the sections divided by the skipped stations (step S2). The target travelling time is set based on the operation timetable information inputted to the data input/output unit 2, for example.

The simulation execution unit 6 performs the travel simulation and creates a highest speed operation curve of the train under a speed limit condition (step S3). As the result of the travel simulation, the highest speed operation curve is created, in which accelerating driving (powering operation), constant-speed driving, and decelerating driving (braking operation) are performed based on the travel sections, the speed limit information for the travel sections, the vehicle performance information of the traveling vehicle, and the travelling route information such as the curves and the slopes. For example, the operation curve is created based on the combination of a simulation starting from the destination station in the direction opposite to the traveling direction and a simulation starting from the departure station in the traveling direction. During the process of the simulation, the speed limit information recorded in the vehicle route information database 4 is referred to and a speed limit suitable for the train location is extracted to create the operation curve in consideration of the speed limit.

FIG. 3(b) shows the highest speed operation curve created under the speed limit condition shown in FIG. 3(a). FIG. 3(b) also shows a powering operation curve w2 and a braking operation curve w3 of the train in addition to the highest speed operation curve w1. The operation curve of FIG. 3(b) shows that in addition to the powering operation immediately after the train starts from the station and the braking operation to stop the train at the destination station, the braking operation is also performed before an area in which the speed limit is low, and the powering is performed again after the low-speed area is passed.

The travelling time evaluation unit 8 evaluates whether the travelling time matches the target travelling time throughout the sections based on the result of the travel simulation in step S3 (step S4). If the travelling time is longer than the target travelling time throughout the sections in step S4, the arrival at the destination station delays even if the highest-speed operation is performed. Since there is no room for adjustment, the procedure in FIG. 2 ends. The data input/output unit 2 outputs the highest speed operation curve as the final operation curve.

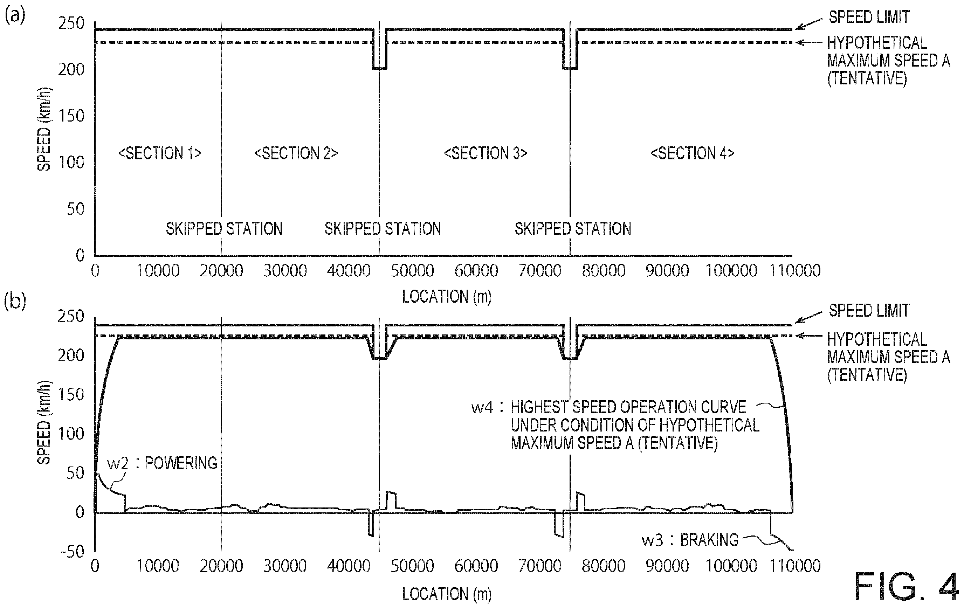

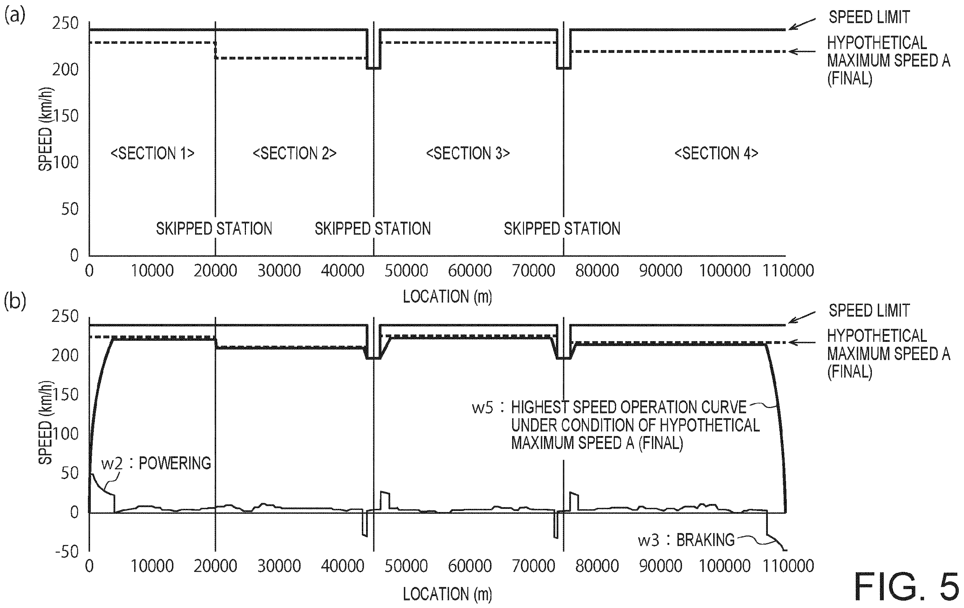

If the travelling time is shorter than the target travelling time throughout the sections in step S4, the parameter adjustment unit 7 adjusts the hypothetical maximum speed in each section (step S5). The hypothetical maximum speed adjusted in step S5 is referred to as "hypothetical maximum speed A." FIG. 4(a) shows a case where a constant value is initially set as the hypothetical maximum speed in each section. As shown in FIG. 5(a), the hypothetical maximum speed in each section is then adjusted separately.

The simulation execution unit 6 performs the first travel simulation on the travelling condition that no coasting is performed, and creates a highest speed operation curve for the train under the conditions of hypothetical maximum speed A set for respective sections (step S6). The lower one of the speed limit and the hypothetical maximum speed A is regarded as the speed limit in the operation curve created in the travel simulation.

FIG. 4(b) shows the highest speed operation curve created under the condition of the hypothetical maximum speed A shown in FIG. 4(a). FIG. 4(b) also shows the powering operation curve w2 and the braking operation curve w3 in addition to the highest speed operation curve w4. FIG. 4(b) shows the highest speed operation curve in a case where the hypothetical maximum speed A is at a single value, 225km/h. Since the hypothetical maximum speed A is still being adjusted, it is referred to as hypothetical maximum speed A (tentative)."

The travelling time evaluation unit 8 evaluates whether the travelling time matches the target travelling time in each section based on the result of the travel simulation in step S6 (step S7). In the operation curve shown in FIG. 4(b), the travelling time in each section is shorter than the target travelling time by 4.1 seconds in section 1, 26.8 seconds in section 2, 1.6 seconds in section 3, and 18.4 seconds in section 4. In sections 2 and 4, the hypothetical maximum speed A needs to be greatly decreased to extend the travelling time. The processes in steps S5 to S7 are repeated until the travelling time matches the target travelling time in each section.

FIG. 5(a) shows the hypothetical maximum speed A after the travelling time matches the target travelling time in all the sections in step S7 and the adjustment is ended, which is referred to as "hypothetical maximum speed A (final)." FIG. 5(b) shows the highest speed operation curve under the condition of the hypothetical maximum speed A (final). FIG. 5(b) also shows the powering operation curve w2 and the braking operation curve w3 in addition to the highest speed operation curve w5. After the hypothetical maximum speed A for each section is adjusted in the unit of 1km/h, the difference between the travelling time and the target travelling time in each section is changed to be within 1.6 seconds in all sections.

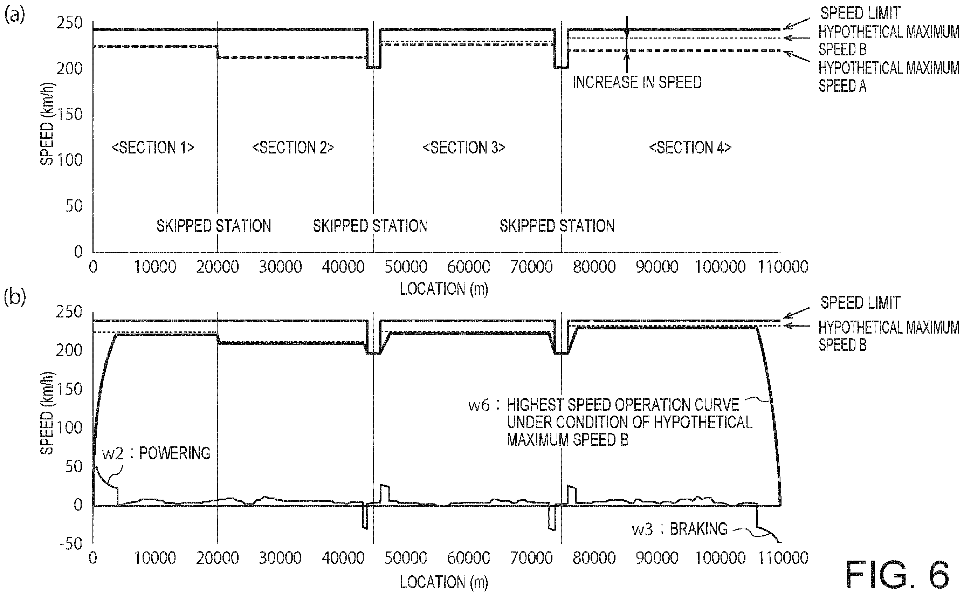

After the adjustment of the hypothetical maximum speed A is finished, the parameter adjustment unit 7 adds an increase in speed to the speed in each section as a pre-process performed before the coasting condition adjustment, and sets a hypothetical maximum speed B (step S8). FIG. 6(a) shows the hypothetical maximum speed B obtained by adding an increase in speed to the speed in each section of the hypothetical maximum speed A (final) after being adjusted. The increase in speed is added to add the coasting factor in step S10, which will be described later, and the increase in speed is created in consideration of the extension of the travelling time due to the coasting. The increase in speed may be adjusted independently for each section. For example, the increase in speed may be greater in a section in which the braking operation is performed relatively frequently since the time may be greatly adjusted in such a section.

The simulation execution unit 6 performs the travel simulation, and creates the highest speed operation curve of the train under the condition of the hypothetical maximum speed B (step S9). FIG. 6(b) shows the operation curve created in step S9. FIG. 6(b) also shows the powering operation curve w2 and the braking operation curve w3 of the train in addition to the highest speed operation curve w6. In the highest speed operation curve corresponding to the hypothetical maximum speed A (final) shown in FIG. 5(b), the difference between the travelling time and the target travelling time in each section is within 1.6 seconds. However, in the highest speed operation curve corresponding to the hypothetical maximum speed B shown in FIG. 6(b), the difference between the travelling time and the target travelling time in each section is in a range from 2 seconds to 33 seconds. The difference may be eliminated and the energy consumption may be reduced by adding a coasting factor.

The parameter adjustment unit 7 adjusts the coasting condition for each section (step S10). The coasting condition is adjusted using the amount of speed reduction caused by the coasting or the coasting start point.

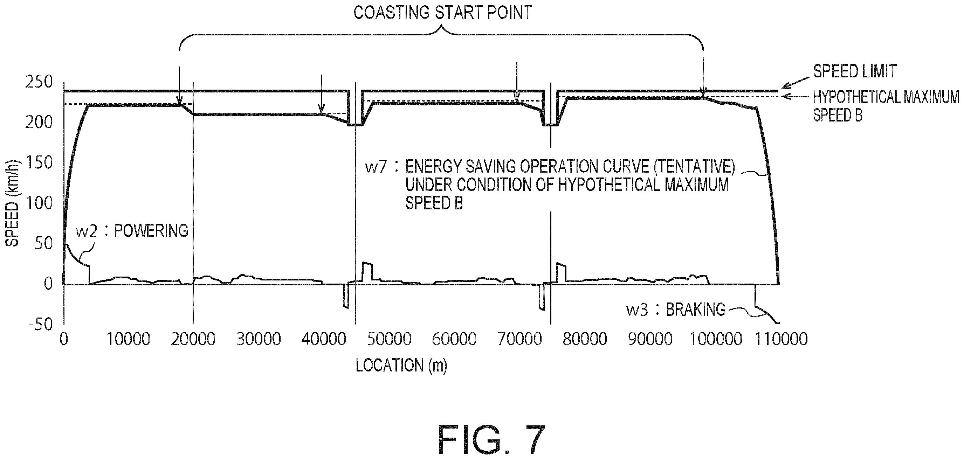

The simulation execution unit 6 performs the second travel simulation for adjusting the coasting condition for each section, and creates an energy saving operation curve under the condition of the hypothetical maximum speed B (step S11). Here, an operation curve created by adjusting a coasting condition instead of adjusting speed in order to obtain the matched travelling time is referred to as the energy saving operation curve. FIG. 7 shows an example of the operation curve created in step S11. FIG. 7 shows the powering operation curve w2 and the braking operation curve w3 together with the energy saving operation curve w7 under the condition of the hypothetical maximum speed B. In the operation curve shown in FIG. 7, the coasting condition, i.e., the amount of the reduction in speed caused by the coasting is set at 10km/h in all sections. Since the coasting condition is still being adjusted, this operation curve is referred to as "energy saving operation curve (tentative)." In the example of this embodiment, the coasting section is determined by the aforementioned travel simulation starting from the destination station in the direction opposite to the traveling direction. Thus, the parameter is the amount of speed reduction caused by the coasting, and in a "braking or decelerating area" before moving to the "constant-speed driving at the hypothetical maximum speed B," a point at which the speed is lower than the hypothetical maximum speed B by the "amount of speed reduction caused by the coasting" is set as a coasting end point, and a point at which the speed reaches the hypothetical maximum speed B in a simulation starting from the coasting end point in the direction opposite to the travelling direction is set as a coasting start point.

The travelling time evaluation unit 8 evaluates whether the travelling time matches the target travelling time in each section based on the result of the travel simulation performed in step S11 (step S12). In the operation curve shown in FIG. 7, the travelling time in each section is shorter than the target travelling time by 1.3 seconds in section 1, 2.7 seconds in section 2, 6.2 seconds in section 3, and 29.5 seconds in section 4. Therefore, the coasting condition needs to be adjusted separately, and in section 4, the coasting needs to be considerably increased to extend the travelling time. The processes in steps S10 to S12 are repeated until the travelling time matches the target travelling time in all sections. If the travelling time and the target travelling time in each section cannot be matched only by adjusting the coasting condition, the hypothetical maximum speed B is adjusted.

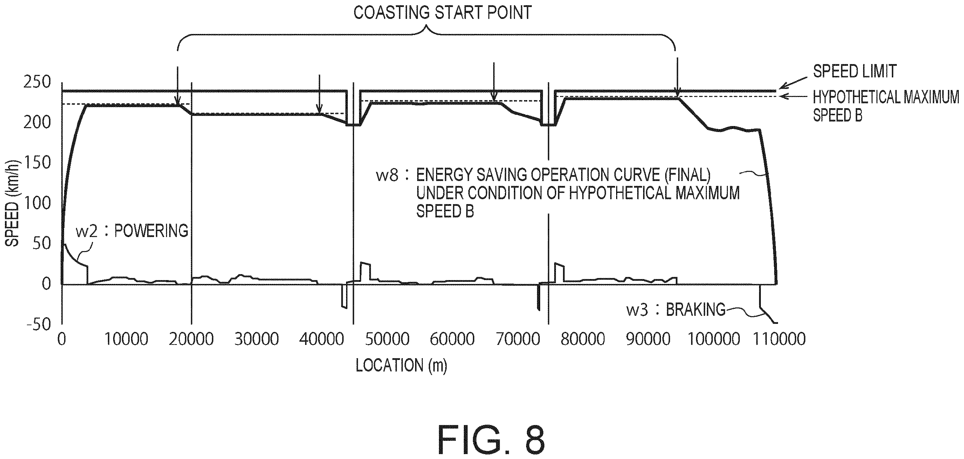

FIG. 8 shows a final energy saving operation curve obtained after the travelling time matches the target travelling time in all sections and the adjustment of the coasting condition is finished in step S12. The operation curve shown in FIG. 8 is referred to as "energy saving operation curve (final)." FIG. 8 also shows the powering operation curve w2 and the braking operation curve w3 of the train in addition to the energy saving operation curve w7 under the condition of the hypothetical maximum speed B. After the coasting condition in each section, i.e., the amount of speed reduction caused by the coasting, is adjusted in the unit of 1km/h, the difference between the travelling time and the target travelling time in each section is changed to be within 2.3 seconds in all sections.

If the travelling time matches the target travelling time in all sections in step S12, the data input/output unit 2 outputs the operation curve at that time as the final operation curve (step S13).

The final operation curve shown in FIG. 8 and the operation curve shown in FIG. 5(b) take substantially the same travelling time, and the energy consumption of the final operation curve shown in FIG. 8 is 3.7% lower than the energy consumption of the operation curve shown in FIG. 5. In the operation curve shown in FIG. 5, the brake is applied at locations around 20000 m, 44000 m, and 74000 m while in the final operation curve shown in FIG. 8, in which the coasting factor is added, no braking operations is performed at locations around 20000 m and 44000 m, and the time for the brake operation performed to stop the train at the destination station is shorter. Since a braking area and a powering area before performing the braking operation are replaced by a coasting area, the motor loss in the powering operation and the regeneration braking operation is avoided, and the energy consumption is decreased.

As described above, the operation curve creation device 1 according to the first embodiment performs the first travel simulation to adjust the hypothetical maximum speed in each section and to create an operation curve in which the travelling time matches the target travelling time in each section on the travelling condition that no coasting is performed. The operation curve creation device 1 then performs the second travel simulation to add an increase in speed to the hypothetical maximum speed in each section adjusted by the first travel simulation, to adjust the coasting condition in each section, and to create an operation curve in which the travelling time matches the target travelling time in each section. As a result, it is possible to create an operation curve, in which the passing time at each point to be skipped is correct and which results in less energy consumption, without setting the speed at each point to be skipped.

In the first embodiment, the hypothetical maximum speed B is set using a predetermined increase in speed, thereby adjusting the coasting condition. However, depending on the conditions of the increase in speed, several coasting conditions may lead to the same target travelling time, and the energy consumption may vary. Therefore, an operation curve that results in still less consumption energy may be created by creating a plurality of operation curves under the conditions of different amounts of increase in speed, and selecting an operation curve that results in a minimum amount of consumption energy. If the travelling distance is relatively short, and the travelling speed is relatively low, the hypothetical maximum speeds A and B may not need to be adjusted, and the travelling time for each section may be adjusted only by adjusting the coasting condition of each section in consideration of the highest-speed operation under the speed limit condition.

The operation curve created by the operation curve creation device 1 according to the first embodiment is used for an energy-saving operation of the train. For example, the energy-saving operation may be assisted by calculating the speed on the operation curve in consideration of the position of the train, and presenting the calculated speed as a target speed to the train driver. Alternatively, an operation control command for driving the train in accordance with the operation curve may be calculated based on the speed and the position of the train to perform an automatic energy-saving operation.

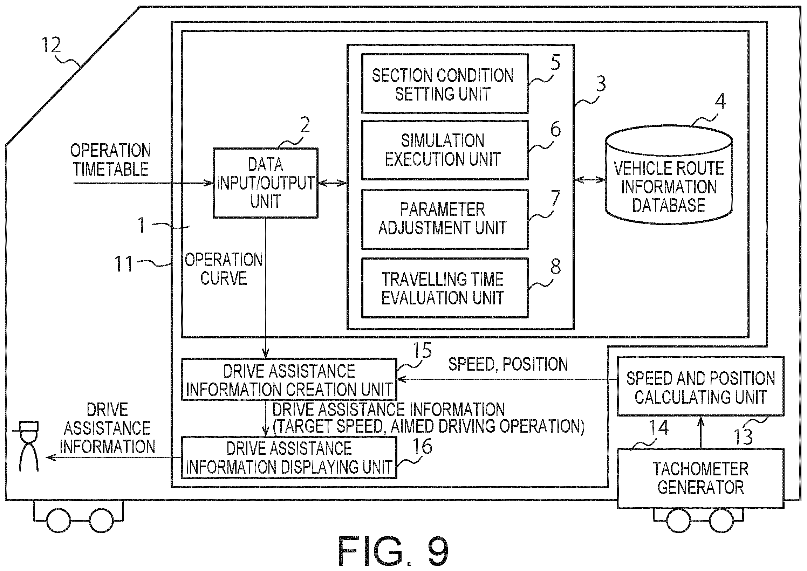

FIG. 9 is a block diagram showing a schematic configuration of an operation assistance device 11 according to a second embodiment, including the operation curve creation device 1 according to the first embodiment. The operation assistance device 11 shown in FIG. 9 is installed in a top railroad car 12. In addition to the operation assistance device 11, a speed and position calculating unit 13 for calculating the speed and the position of the train is installed on the top railroad car 12. The speed and position calculating unit 13 calculates the speed and the position of the train based on information from, for example, a tachometer generator 14 mounted at an end of an axle. The speed and the position of the train may be calculated based on information from such a device as a global positioning system (GPS).

The operation assistance device 11 shown in FIG. 9 includes a drive assistance information creation unit 15 and a drive assistance information displaying unit 16 in addition to the operation curve creation device 1 shown in FIG. 1.

The drive assistance information creation unit 15 creates drive assistance information to be presented to the train driver based on the operation curve created at the operation curve creation device 1 and the speed and the position of the train calculated at the speed and position calculating unit 13. For example, the speed and position calculating unit 13 calculates the speed on the operation curve in accordance with the position of the train and displays the calculated speed as a target speed, or displays an aimed driving operation based on a difference between the speed of the train and the target speed. The drive assistance information displaying unit 16 displays the drive assistance information created by the drive assistance information creation unit 15. The train driver may appropriately drive the train according to the energy saving operation curve by manipulating a master controller or a brake lever in consideration of the drive assistance information displayed on the drive assistance information displaying unit 16. The drive assistance information may be provided by means of voice.

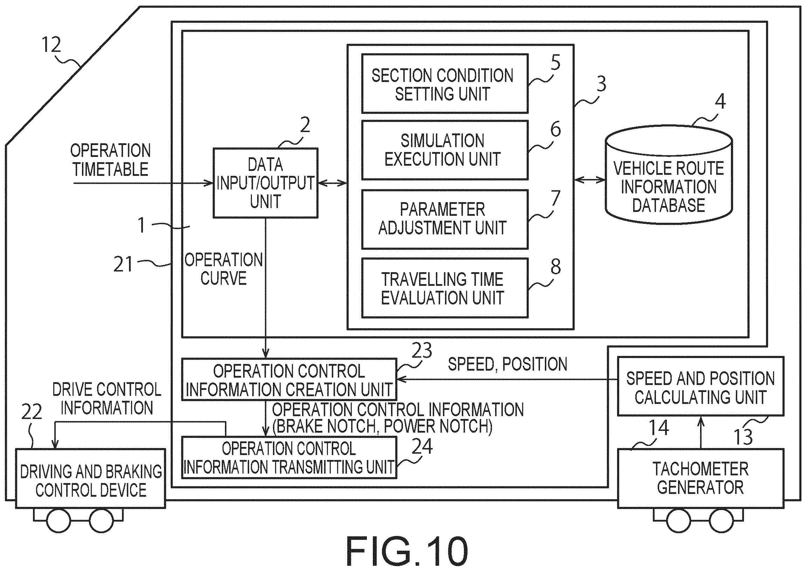

FIG. 10 is a block diagram showing a schematic configuration of an operation control device 21 according to a third embodiment, including the operation curve creation device 1 according to the first embodiment. The operation control device 21 shown in FIG. 10 is for performing automatic driving of the train. For example, the operation control device 21 shown in FIG. 10 is installed in a top railroad car 12 of the train. In addition to the operation control device 21, a speed and position calculating unit 13 and a driving and braking control device 22 are installed in the top railroad car 12. The speed and position calculating unit 13 is the same as the speed and position calculating unit 13 shown in FIG. 9. The driving and braking control device 22 controls the operation of a brake device that is not shown, as well as the driving and the braking of the motor.

The operation control device 21 shown in FIG. 10 includes an operation control information creation unit 23 and an operation control information transmitting unit 24 in addition to the operation curve creation device 1 shown in FIG. 1. The operation control information creation unit 23 creates operation control information based on the operation curve created by the operation curve creation device 1 shown in FIG. 1 and the speed and the position of the train calculated by the speed and position calculating unit 13. The operation control information is, for example, the brake notch or the power notch for driving the train in accordance with the operation curve. The operation control information transmitting unit 24 transmits the operation control information to the driving and braking control device 22. The driving and braking control device 22 controls the driving and the braking of the motor according to the operation control information, and controls the operation of a brake device that is not shown, thereby enabling an appropriate automatic driving to be performed in accordance with the energy saving operation curve.

At least a part of the operation curve creation device 1, the operation assistance device 11 and the operation control device 21 according to the above-described embodiments may be configured as hardware or software. If the software is selected, a program for realizing at least a portion the functions of the operation curve creation device 1, the operation assistance device 11, and the operation control device 21 may be stored in a removable medium or a hard disk drive, and read and executed by a computer.

While certain embodiments have been described, these embodiments have been presented by way of example only, and are not intended to limit the scope of the inventions. These novel embodiments may be embodied in a variety of other forms. Furthermore, various omissions, substitutions and changes may be made without departing from the spirit of the inventions. The accompanying claims and their equivalents are intended to cover such embodiments and their modifications as would fall within the scope and spirit of the inventions.

### REFERENCE SIGNS LIST

- 1:: operation curve creation device
- 2:: data input/output unit
- 3:: calculation unit
- 4:: vehicle route information database
- 5:: section condition setting unit
- 6:: simulation execution unit
- 7:: parameter adjustment unit
- 8:: travelling time evaluation unit
- 11:: operation assistance device
- 12:: top railroad car
- 13:: speed and position calculating unit
- 14:: tachometer generator
- 15:: drive assistance information creation unit
- 16:: drive assistance information displaying unit
- 21:: operation control device
- 22:: driving and braking control device
- 23:: operation control information creation unit
- 24:: operation control information transmitting unit

## Claims

1. An operation curve creation device comprising:
a section condition setting unit that sets a travelling range of a movable object, the travelling range having a plurality of sections divided at points to be skipped, and sets a target travelling time in each of the sections;
a simulation execution unit that executes a travel simulation based on a parameter set for each of the section, and creates an operation curve of the movable object in the travelling range;
a travelling time evaluation unit that evaluates whether a travelling time matches the target travelling time in each of the sections in the travel simulation; and
a parameter adjustment unit that adjusts the parameter set for each of the sections according to an evaluation result of the travelling time evaluation unit.

2. The operation curve creation device according to claim 1, wherein the parameter includes at least one of a hypothetical maximum speed set for each of the sections and an amount of decrease in speed caused by a coasting factor or a coasting start point set for each of the sections.

3. The operation curve creation device according to claim 2, wherein the simulation execution unit performs a first travel simulation in which the hypothetical maximum speed set for each of the sections is adjusted so that an operation curve is created in which the travelling time matches the target travelling time in each of the sections on the condition that no coasting is performed, and a second travel simulation in which an increase in speed in each of the sections is added to the hypothetical maximum speed in each of the sections adjusted in the first travel simulation, and a coasting condition is adjusted in each of the sections, so that an operation curve is created in which the travelling time matches the target travelling time in each of the sections.

4. The operation curve creation device according to claim 3, wherein if the travelling time does not match the target travelling time in each of the sections by adjusting the coasting condition, the parameter adjustment unit adjusts the hypothetical maximum speed in each of the sections.

5. The operation curve creation device according to claim 3, wherein the travelling time evaluation unit selects an operation curve having a minimum amount of energy consumption from a plurality of operation curves created on different conditions with respect to the increase in speed.

6. An operation assistance device comprising:
the operation curve creation device according to any one of claims 1 through 5; and
a drive assistance information creation unit that creates drive assistance information based on the operation curve created by the operation curve creation device, the drive assistance information being presented to a driver of the movable object.

7. An operation control device comprising:
an operation curve creation device according to any one of claims 1 through 5; and
an operation control information creation unit that creates operation control information based on the operation curve created by the operation curve creation device, the movable object being driven while being controlled based on the operation control information.
